Europäisches Patentamt

European Patent Office

Office européen des brevets

(11) Publication number: **0 023 527**
A1

# EUROPEAN PATENT APPLICATION

(21) Application number: **79301580.1**

(51) Int. Cl.³: **C 08 B 1/08**

(22) Date of filing: **06.08.79**

(43) Date of publication of application: **11.02.81**
Bulletin 81/6

(84) Designated Contracting States: **AT BE CH DE FR GB IT LU NL SE**

(71) Applicant: **FIBER ASSOCIATES Incorporated, 1206 Lancaster Avenue, Berwyn, Pa. 19312 (US)**

(72) Inventor: **Geyer Jr, Charles J., 1224 Lancaster Avenue, Berwyn, Pa.19312 (US)**
Inventor: **White, Ben E., 131 Walnut St., Philadelphia. Pa. 19087 (US)**

(74) Representative: **Coxon, Philip et al, Eric Potter & Clarkson 14 Oxford Street, Nottingham NG1 5BP (GB)**

(54) Processes and apparatus for making and depolymerising alkali cellulose.

(57) A process and apparatus for making alkali cellulose having a desired predetermined degree of polymerisation in which cellulose is steeped in an alkali hydroxide bath, generally 17–25% sodium hydroxide, and then passed through an RF treatment chamber where it is subjected to an RF energy field, to produce a controlled depolymerisation thereof. Upon emergence from the steeping bath, the cellulose passes to an excess solution removing means, such as one or a series of pairs of nip rolls where the excess solution is expressed from the cellulose and the amount of absorbed alkali is controlled. Preferably, the excess solution is recovered and returned to the steeping baths. A second, lower concentration, steep bath may follow the RF treatment chamber.

ACTORUM AG

1

PROCESSES AND APPARATUS FOR MAKING AND DEPOLYMERISING
ALKALI CELLULOSE.

This invention relates to a process and apparatus
for producing alkali cellulose.  More particularly the
invention concerns making alkali cellulose and depolymerising to a desired predetermined degree of polymerisation.

A variety of processes and apparatus have been
proposed heretofore for steeping cellulose in an alkali
hydroxide solution to produce alkali cellulose which is
subsequently xanthated, filtered and formed, more particularly spun, into a product, such as continuous or
staple yarn.  One common procedure is to vertically
stand a plurality of sheets of such cellulose in a batch-
wise manner, and immerse the sheets in an alkali hydroxide solution bath.  Continuous steeping has also been
proposed, either by immersion of shredded cellulose in
alkali hydroxide solution and later expressing the excess
solution from the steeped slurry product or by continuously applying or contacting or immersing sheet cellulose
of indefinite length in a steeping spray or bath.  Such
processes or parts thereof are seen, for example, in U.S.
Patents Numbers 2,614,102-Schlosser et al, 2,499,010-
Weeldenburg, 2,143,863-Collings et al and 2,149,178-
Morton.

Following steeping it has been customary to age
(mercerize) the alkali cellulose to bring about a depolymerisation of the cellulose from a DP of 700 - 1000
to approximately 300 - 450, depending on the product to be
made.  Normally, the alkali cellulose is shredded and
either collected in batches in cans, or treated continuously on belts or in towers for periods of time depending

2

on the temperature and the catalysts present. Such periods of time have ranged from 20 to 80 hours.

It is known that catalysts such as iron, manganese, cobalt, salts, et cetera, catalyse the oxidation reaction and markedly reduce aging time. Similarly, higher temperatures and higher caustic content of alkali cellulose reduce aging time.

It has also been known that after mercerizing, the caustic content can be reduced by resteeping in a caustic solution of approximately 10 - 12% (by weight) sodium hydroxide, without adversely affecting its ability to form cellulose xanthate, and resulting in fewer by-products in the form of sulphur compounds being formed by the reaction of free excess sodium hydroxide with carbon disulfide. A process of this type is disclosed by Sihtola in U.S. Patents Numbers 3,600,379 and 3,728,330.

Previously disclosed processes for steeping and mercerizing continuously in sheet form always involved either low rates of through-put or very cumbersome and space-requiring means of mercerizing the continuous sheet prior to xanthation or to a second steeping followed by xanthation.

It is an object of the present invention to provide an improved process and apparatus for making alkali cellulose.

According to one aspect of the present invention we provide a process for depolymerising alkali cellulose comprising

exposing said alkali cellulose to RF energy for a period of time and at an energy input level sufficient to depolymerise said alkali cellulose to a desired predetermined degree of polymerisation.

According to another aspect of the present invention we provide a process for making alkali cellulose and depolymerising to a desired predetermined degree of polymerisation, comprising first contacting

3

cellulose with 17 - 25% alkali hydroxide solution, removing said cellulose from said solution and pressing out caustic soda solution followed by a rapid depolymerisation process to bring about the desired depolymerisation of the cellulose, said depolymerisation process consisting of exposing said cellulose to RF energy for a period of time and at an energy input level sufficient to depolymerise said alkali cellulose to said desired predetermined degree of polymerisation.

According to yet another aspect of the present invention we provide an apparatus for depolymerising alkali cellulose comprising :

a treatment chamber including means for generation of an RF energy field therein, and having means for subjecting said cellulose to said RF energy field for a period of time and at an energy input level sufficient to depolymerise said alkali cellulose to a predetermined degree of polymerisation.

According to yet another aspect of the present invention we provide an apparatus for making alkali cellulose and depolymerising to a predetermined degree of polymerisation, said apparatus comprising :

(a)   a first bath for containing 17 - 25% alkali hydroxide solution, said bath being adapted to permit said cellulose to be passed therethrough and immersed therein,

(b)   means for expressing excess solution from said cellulose following immersion of said sheet in said first bath,

(c)   an RF treatment chamber having means therein for subjecting cellulose passing therethrough to an RF energy field, for a period of time and at an energy input level sufficient to depolymerise said alkali cellulose to the desired predetermined degree of polymerisation,

4

(d)   means for continuously delivering said
cellulose and passing it through said first bath, while
immersing it therein, through said RF treatment chamber
and to said excess solution expressing means.

In one particular embodiment of the invention,
where the cellulose is in sheet form, any desired width
of sheet may be passed first through a first stage
steep bath at a rate, for example, of about 1 foot per
second.   The steep bath, which may be of the order of
10 - 15 feet in length, consists of 17 - 25% alkali
hydroxide solution.   This caustic soda solution may
contain manganese or cobalt catalysts, or other chemical
additives to accelerate depolymerisation, and is in the
normal steeping temperature range of 18 - 50$^{\circ}$ C, pref-
erably about 25$^{\circ}$C.   After steeping, excess solution
is removed from the sheet by a series of pairs of nip
rolls, each of which subjects the sheet to a successively greater pressure.

The pressures used are such as to give 3.2 to 2.6
press ratios.   Press ratio  is the weight ratio of pulp
after pressing divided by the weight before steeping.
Preferably also, a vacuum suction means is disposed just
upstream of the nip roll pairs for removing excess
solution expressed in the nip rolls.

The sheet then moves to the RF treatment chamber
in which it is passed between electrodes subjecting it
to electro-magnetic (RF or microwave) energy at a
frequency of $10^7 - 10^{11}$ hertz.   This raises the
temperature to bring about the desired degree of polymerisation in a very short time, more specifically,
about 1/2 to 4 minutes, and preferably about 2 minutes.

Following the RF treatment, the alkali cellulose
sheet can then proceed directly to the xanthation step,
or it can proceed through a second steeping operation,

5

similar in apparatus to the first steeping operation, in which it is treated with a catalyst-free, more dilute caustic solution (on the order of 8 - 15% sodium hydroxide) displacing a part of the excess free caustic soda, pressed to a press ratio of 3.0 to 2.4. It then is transferred to the xanthation stage.

Excess solution removed from the alkali cellulose product is recirculated to the steeping baths with the usual means of control of hemi-cellulose. These means for handling the sheet cellulose and passing it through the successive treatment steps may also include means for handling a plurality of indefinite length sheets of cellulose superposed over one another through the process. Means should also be included in the case of such superposed plurality of sheets to maintain such sheets in a spaced apart relation as they are immersed in and passed through each of the alkali hydroxide baths.

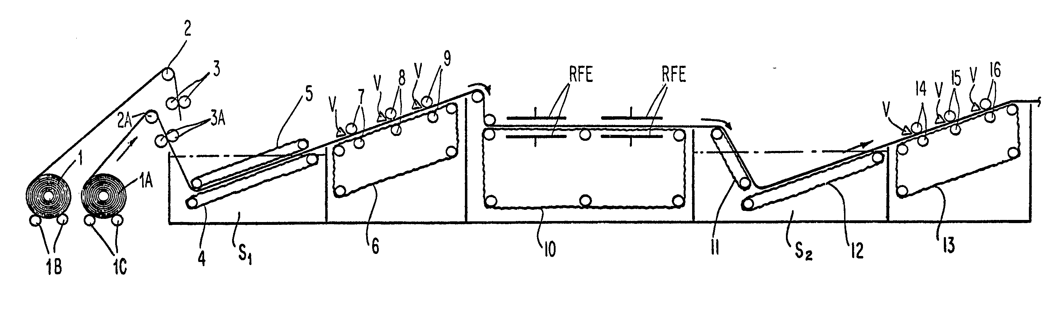

Reference is now made to the drawing which is a diagrammatic illustration of the process and apparatus of a preferred form of the present invention.

Referring specifically to the drawing, there is shown alternate cellulose pulp sheet supply rolls 1, 1a, with drive rolls 1b, 1c, supplying strips of pulp of indefinite length and any desired width, respectively over idler rolls 2, 2a and through feed roll pairs 3, 3a to a first alkali hydroxide steeping bath $S_1$, supported therein by endless guide belts 4 and 5, comprised of an open mesh glass or polypropylene fabric. Drive rolls 1b, 1c, feed roll pairs 3, 3a, and endless guide belts 4 and 5 are sychronized to convey the pulp sheet at a relatively constant velocity.

Preferably first stage steep bath $S_1$ is an 18 - 20% sodium hydroxide solution and the length of immersed sheet and its speed of travel is selected to provide an

6

immersion time of 8 - 15 seconds. The nominal velocity of the pulp sheet is about 1 ft/sec and the length of travel in bath $S_1$ is about 10 - 15 feet. Leaving steep bath $S_1$, the sheet is supported by another open mesh belt 6 as it passes through a series of pairs of nip rolls 7, 8, and 9, the rolls of each pair being spaced and urged toward one another to exert succeedingly higher pressure on the sheet product to express solution therefrom without physically damaging the sheet. Generally, a progressively lower press ratio, in the range of 3.2 to 2.6, is used. One or more catch pans may be provided to recover drippings of excess alkali hydroxide from nip rolls 7, 8 and 9. Preferably, however, vacuum suction means V are provided upstream of one or more of each pair of nip rolls to remove excess alkali hydroxide expressed from the alkali cellulose strip passing therethrough. The excess alkali hydroxide solution recovered in this manner may be recirculated to the make-up stream for the steeping bath in a conventional manner.

The alkali cellulose sheet is then picked up by porous endless glass belt support 10 for RF treatment. RF treatment may be promoted by introducing into the steep liquor of bath $S_1$ depolymerisation accelerators, such as manganese and cobalt catalysts. An elevated temperature, on the order of $45^\circ C$, for example, may also be maintained to promote depolymerisation in accordance with known methods. Depolymerisation is achieved rapidly by imparting energy to the cellulose in the form of RF energy, from electrodes RFE, in a frequency range of $10^7-10^{11}$ hertz, and sufficient power to bring about the desired degree of polymerisation during the time allowed in the treatment stage. Other known methods of accelerating depolymerisation may be used in conjunction with RF energy.

7

Following RF depolymerisation, some cooling stage may be required prior to xanthation. In the preferred form of this invention, this cooling is effected by the second steeping bath, which is maintained at a temperature selected to maintain optimum xanthation conditions (generally between $30^{\circ}$ and $40^{\circ}C$).

The partially depolymerised alkali cellulose sheet is then forwarded to a second steeping bath of alkali hydroxide solution (in the preferred form of the present invention). Bath $S_2$ comprises about 9-11% sodium hydroxide. Support belts 11 and 12 comprised of an open mesh woven glass or polypropylene fabric, are provided to forward the sheet material through the second steeping bath. The steeping time and excess solution removing means (13, 14, 15 and 16) in steeping bath $S_2$ are approximately the same as those in bath $S_1$. However, the final press ratio in nip rolls 16 may be as low as 2.4 to minimize excess caustic in the subsequent xanthation step.

Similar vacuum suction removal means V, as those described with respect to bath $S_1$ may be provided to recover excess alkali hydroxide and to recirculate or recover excess solution expressed from the alkali sheet by nip roll pairs 14, 15 and 16 and the vacuum pick-up.

The depolymerisation process described herein, using RF energy, is preferably used in conjunction with a travelling sheet steeping process as described herein. However, this RF depolymerisation may also be used in conjunction with other processes such as those in which the alkali cellulose is in crumb form.

In the case of alkali cellulose crumb, the process may comprise, for example, conveying of such crumb on a belt conveyor through an RF treatment chamber, in the course of which the degree of polymerisation of the alkali cellulose may be reduced, for example, from about 700 - 1000 to approximately 300 - 450, just as in

8

the two stage continuous sheet process. Similarly, the alkali cellulose crumb may thereafter be resteeped and/or compressed for removal of residual caustic steeping solution.

Whilst continuous feed of sheet cellulose has been described above the process may be carried out batch-wise. The exposure to RF may be accomplished not only by conveying the sheet passed an RF source but, alternatively, by a mounting of the RF source in a manner to move and pass over the surface area of the alkali cellulose to be treated.

While this invention has been described with respect to selected embodiments and examples, it should be understood that various minor modifications and adaptations of the process and apparatus of the present invention may be made. For example, while this invention has been illustrated in an embodiment involving a single cellulose strip continuously fed through and treated in accordance with the apparatus and process of this invention, a plurality of such strips, superposed and spaced apart from one another, may also be utilized.

CLAIMS.

1. Process for making alkali cellulose and depolymerizing to a desired predetermined degree of polymerization, comprising first contacting cellulose with 17-25% alkali hydroxide solution, removing said cellulose from said solution and pressing out caustic soda solution followed by a rapid depolymerization process to bring about the desired depolymerization of the cellulose, said depolymerization process consisting of exposing said cellulose to RF energy for a period of time and at an energy input level sufficient to depolymerize said alkali cellulose to said desired predetermined degree of polymerization.

2. A process according to Claim 1, wherein said RF energy comprises electromagnetic waves having a frequency of $10^7 - 10^{11}$ hertz and said cellulose is passed through the energy field.

3. A process according to Claim 1 or 2, wherein excess alkali hydroxide solution is removed from said cellulose after said cellulose has emerged from said 17-25% alkali hydroxide solution by passing said cellulose through a series of pairs of nip rolls, the pressure between the rolls of the last of said pairs being higher than that in each of the preceding pairs of rolls and the pressure between the rolls in each of the preceding pairs of rolls being less than that of the next succeeding pair in said series.

4. A process according to Claim 3, wherein said series of pairs of nip rolls comprises three such pairs, the pressure between the rolls in each of said pairs being selected to provide progressively lower press ratios downstream of each of said pairs, the final press ratios being in the range 3.2 to 2.6

10

5. A process, according to Claim 3 or 4 wherein vacuum suction means are located at the upstream side of each of said pairs of nip rolls to remove excess solution expressed there from said cellulose.

6. A process according to Claims 3, 4 or 5, wherein excess solution expressed from said cellulose by said nip rolls is recirculated for reuse in contacting said cellulose.

7. A process according to any of Claims 1 to 6 in which the cellulose is in the form of crumbs.

8. A process according to any of Claims 1 to 6 in which the cellulose is in sheet form.

9. A process, according to Claim 8, wherein said cellulose comprises a plurality of superposed cellulose sheets of indefinite length, said sheets being spaced apart from one another during said immersion in said alkali hydroxide solution.

10. A process, according to any of Claims 1 to 9, wherein said cellulose is first contacted with an 18 - 20% sodium hydroxide solution.

11. A process, according to any of Claims 1 to 10, wherein said cellulose is resteeped, following said RF energy treatment in an 8 - 15% alkali hydroxide solution.

12. A process according to any of Claims 1 to 10 wherein said cellulose is resteeped, following said RF energy treatment in a 9-11% sodium hydroxide solution.

13. A process according to any of Claims 1 to 12 in which the source of RF energy is adapted to pass over said cellulose.

14. A process for depolymarising alkali cellulose comprising

exposing said alkali cellulose to RF energy for a period of time and at an energy input level sufficient to depolymerise said alkali cellulose to a desired predetermined degree of polymerisation.

15.    Apparatus for making alkali cellulose and depolymerising to a predetermined degree of polymerisation, said apparatus comprising

(a)    a first bath for containing 17-25% alkali hydroxide solution, said bath being adapted to permit said cellulose to be passed therethrough and immersed therein,

(b)    means for expressing excess solution from said cellulose following immersion of said sheet in said first bath,

(c)    an RF treatment chamber having means therein for subjecting cellulose passing therethrough to an RF energy field, for a period of time and at an energy input level sufficient to depolymerise said alkali cellulose to the desired predetermined degree of polymerisation,

(d)    means for continuously delivering said cellulose and passing it through said first bath, while immersing it therein, through said RF treatment chamber and to said excess solution expressing means.

16.    Apparatus according to Claim 15, wherein said excess solution expressing means consists of a series of pairs of nip rolls, the pressure between the rolls of the last of said pairs being higher than that in each of the preceding pairs of rolls and the pressure between the rolls in each of the preceding rolls being less than that of the next succeeding pair in said series, said pressures being selected to provide progressively lower press ratios, the final press ratio within the range 3.2 to 2.6

17.    Apparatus according to Claim 15 or 16 including a second bath for containing a 8-15% alkali hydroxide solution, said bath being adapted to permit said cellulose to be passed therethrough, following RF treatment, and immersed therein.

12

18.    Apparatus according to Claim 17 including means to maintain said second bath at a desired predetermined temperature for subsequent xanthation, preferably between $30^{\circ}$ - $40^{\circ}$C.

19.    Apparatus according to any of Claims 15 to 18 in which the cellulose is in sheet form and wherein said delivering means further include means for delivering and forwarding a plurality of superposed cellulose sheets, and for maintaining said sheets spaced apart from one another as they are passed through said alkali hydroxide baths.

20.    An apparatus for depolymerising alkali cellulose comprising

a treatment chamber including means for generation of an RF energy field therein, and having means for subjecting said cellulose to said RF energy field, for a period of time and at an energy input level sufficient to depolymerise said alkali cellulose to a predetermined degree of polymerisation.

1/1

## DOCUMENTS CONSIDERED TO BE RELEVANT

| Category | Citation of document with indication, where appropriate, of relevant passages | Relevant to claim |
|---|---|---|
| | <u>DE - C - 834 267</u> (SUDDEUTSCHE ZELL-WOLLE) <br> * The whole document * | 1-20 |
| A | <u>DE - C - 688 968</u> (PAUL LIPPKE) <br> * Claims * | 1 |
| A | <u>GB - A - 641 609</u> (AMERICAN VISCOSE) <br> * Claims * | 1 |
| A | <u>FR - A - 1 192 359</u> (DU PONT DE NE-MOURS) <br> * Claims * | 1 |
| A | CHEMISCHES ZENTRALLBLATT, no. 4, 1963, page 1505 (ZAIDAN HOJIN) <br> & JP - B - 8347/1960 (MASAO HORIS et al.) <br> * The whole abstract * | 1 |
| A | <u>US - A - 3 855 575</u> (JAMES BROWN PARKER) <br> * Claims * | 1 |

**CLASSIFICATION OF THE APPLICATION (Int. Cl. ³)**

C 08 B 1/08

**TECHNICAL FIELDS SEARCHED (Int.Cl. ⁴)**

C 08 B 1/08
C 08 B 1/10
C 08 B 9/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-04-1980 | LENSEN |

EPO Form 1503.1 06.78

BAD ORIGINAL